(19) Europäisches Patentamt
European Patent Office
Office européen des brevets

(11) Veröffentlichungsnummer: **0 309 907 B1**

(12) **EUROPÄISCHE PATENTSCHRIFT**

(45) Veröffentlichungstag der Patentschrift: **22.06.94**

(51) Int. Cl.$^5$: **C08L 71/12**, C08L 25/02, C08L 77/00, C08K 5/49

(21) Anmeldenummer: **88115562.6**

(22) Anmeldetag: **22.09.88**

(54) **Selbstverlöschende thermoplastische Polyphenylenether-Polyamid-Formmassen.**

(30) Priorität: **30.09.87 DE 3732907**

(43) Veröffentlichungstag der Anmeldung:
**05.04.89 Patentblatt 89/14**

(45) Bekanntmachung des Hinweises auf die Patenterteilung:
**22.06.94 Patentblatt 94/25**

(84) Benannte Vertragsstaaten:
**BE DE FR GB IT NL**

(56) Entgegenhaltungen:
**EP-A- 0 046 040**
**EP-A- 0 129 825**
**US-A- 4 433 088**

(73) Patentinhaber: **BASF Aktiengesellschaft**
**Carl-Bosch-Strasse 38**
**D-67063 Ludwigshafen(DE)**

(72) Erfinder: **Taubitz, Christof, Dr.**
**In der Dreispitz 15**
**D-6706 Wachenheim(DE)**
Erfinder: **Gausepohl, Hermann, Dr.**
**Neuweg 10**
**D-6704 Mutterstadt(DE)**
Erfinder: **Boehlke, Klaus, Dr.**
**Gerhart-Hauptmann-Strasse 53**
**D-6717 Hessheim(DE)**

EP 0 309 907 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung betrifft neue selbstverlöschende, thermoplastische Polyphenylenether-Polyamid-Formmassen, die enthalten als wesentliche Aufbaukomponenten

A) eine Komponente (A), die besteht aus einem modifizierten Polyphenylenether (A1) und einer Phosphor gebunden enthaltenden Verbindung,

B) eine Komponente (B), die besteht aus mindestens einem Polyamid (B1) und einer einen Triazinrest gebunden enthaltenden Verbindung aus der Gruppe der Cyanursäure und -derivate,

C) gegebenenfalls einen schlagzäh modifizierenden Kautschuk und

D) gegebenenfalls Zusatzstoffe.

Polyphenylenether sind Kunststoffe mit sehr guten thermischen, mechanischen und elektrischen Eigenschaften; sie weisen jedoch nur eine sehr geringe Lösungsmittelbeständigkeit auf. Dies gilt auch für ein im Handel befindliches Gemisch aus Polyphenylenether und Styrolpolymerisaten. Die Verwendbarkeit derartiger Produkte ist daher eingeschränkt.

Nach Angaben der US-A-3 379 792 können die Schmelzfließeigenschaften von Polyphenylenethern durch Zusatz von bis zu 25 Gew.% eines Polyamids verbessert werden. Ferner wird in dieser Patentschrift festgestellt, daß bei einem Polyamidzusatz von mehr als 20 Gew.% andere Eigenschaften des Polyphenylenethers erheblich verschlechtert werden.

Aus der GB-A 2 054 023 sind auch bereits Mischungen aus Polyphenylenethern und Polyamiden mit höheren Polyamid-Gehalten bekannt; zur Erzielung guter Eigenschaften ist es jedoch erforderlich, einen längeren Mischvorgang in der Schmelze vorzunehmen. Bei solch hoher thermischer Belastung über größere Zeiträume treten jedoch leicht Abbauerscheinungen auf.

In der EP-A 24 120 (US-A-4 315 086) und EP-A 46 040 (US-A-4 339 376) werden Mischungen aus Polyamiden, nicht modifizierten Polyphenylenethern und Maleinsäureanhydrid und/oder Maleinsäureimid beschrieben. Die in diesen Schriften beschriebenen Massen bzw. die daraus hergestellten Formkörper weisen eine unbefriedigende Schlagzähigkeit, insbesondere bei der Verwendung von Kautschuk als zusätzlichen Komponente, und einen für viele Anwendungszwecke viel zu niedrigen Schmelzindex (MFI) auf.

Thermoplastische Formmassen, die als wesentliche Komponenten enthalten: ein Polyamid, einen modifizierten Polyphenylenether, gegebenenfalls einen nicht-modifizierten Polyphenylenether, gegebenenfalls ein vinylaromatisches Polymeres und gegebenenfalls einen schlagzäh modifizierenden Kautschuk werden beschrieben in der EP-A-0 253 123. Die Formmassen zeichnen sich durch eine gute Verarbeitbarkeit und ausgewogene thermische, mechanische und dielektrische Eigenschaften aus, wobei insbesondere ihre gute Schlagzähigkeit (auch mehraxiall und ihre Lösungsmittelbeständigkeit hervorzuheben sind. Unbefriedigend ist lediglich die Flammwidrigkeit der Formmassen; da für manche Anwendungsbereiche selbstverlöschende Produkte gefordert werden.

Es ist bekannt, daß die Brennbarkeit von Kunststoffen durch Zumischen von flammhemmenden Substanzen verringert werden kann. Dabei ist die Brauchbarkeit dieser flammhemmenden Additive aber nicht für alle Kunststofftypen gleich, vielmehr müssen für jede Kunststoffart eigene Systeme gefunden werden.

Nach Angaben der DE-B-18 03 606 (US-A-3 663 495) werden selbstverlöschende Polyamidformmassen erhalten, die als flammhemmendes Zusatzmittel 0,1 bis 25 Gew.%, bezogen auf die Formmassen, einer Kombination aus Melamin oder -derivaten und Tetrahalogenphthalsäureanhydriden, -imiden oder -amiden enthalten.

Zur Verbesserung der Haftfestigkeit an unterschiedlichen Lacküberzügen werden Polyamidmassen gemäß EP-A-0 101 207 anorganische Füllstoffe und Triazinringe enthaltende Verbindungen einverleibt. Angaben über die Flammwidrigkeit der Formmassen werden nicht offenbart.

Mit Melamin als Flammschutzmittel brandwidrig ausgerüstete Polyamidformmassen werden auch in der DE-A-32 48 330 (US-A-4 525 505) beschrieben. Nachteilig an derartigen Formmassen ist die Migration des Melamins aus hieraus hergestellten dünnwandigen Formteilen, die durch Zusatz von 1 bis 7 Gew.%, bezogen auf das Gesamtgewicht der Polyamidformmasse, wenigstens eines thermoplastischen Polyacetals reduziert werden kann.

Polymermischungen auf der Grundlage von Polyphenylenethern und Polyamiden, in die zur Verbesserung der mechanischen Eigenschaften oxidierte Polyolefinwachse und gegebenenfalls Phosphite eingebracht werden, die als Vernetzer wirken, sind bekannt aus der EP-A-0 164 767. Die Patentpublikation enthält jedoch keine Aussage hinsichtlich des Verhaltens der Produkte im Brandfalle.

Aufgabe der vorliegenden Erfindung war es, selbstverlöschende, thermoplastische Polyphenylenether-Polyamid-Formmassen mit guten mechanischen Eigenschaften zur Verfügung zu stellen, die bei der Brandschutzprüfung nach der Testmethode UL 94 mindestens der Klassifizierung V-0 entsprechen. Hinsichtlich bekannter flammwidriger Polyphenylenether-Polyamid-Formmassen sollten die mechanischen Eigenschaften, insbesondere die Schlagzähigkeit verbessert werden, oder es sollten Formmassen mit guter Verarbeitbarkeit und guten mechanischen Eigenschaften, wie sie z.B. in der EP-A-0 253 123 beschrieben werden, ohne Verminderung des Eigenschaftsniveaus flammwidrig ausgerüstet werden.

Diese Aufgabe konnte überraschenderweise gelöst werden durch die Verwendung speziell modifizierter Polyphenylenether als Aufbaukomponente für die Polyphenylenether-Polyamid-Formmasse sowie eine ausgewählte Flammschutzmittelkombination.

Gegenstand der Erfindung sind somit selbstverlöschende, thermoplastische Polyphenylenether-Polyamid-Formmassen, die enthalten als wesentliche Aufbaukomponenten

A) 10 bis 90 Gew.% der Komponente (A), die besteht aus

$(A_1)$ 70 bis 99 Gew.% eines modifizierten Polyphenylenethers, hergestellt aus

$a_1$) 4,95 - 99,95 Gew.% eines Polyphenylenethers,

$a_2$) 0 - 90 Gew.% eines vinylaromatischen Polymeren,

$a_3$) 0,05 - 10 Gew.%

$a_{31}$) Fumarsäure und/oder

$a_{32}$) eines Maleinimids der allgemeinen Formel I

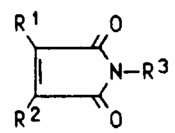

(I),

wobei $R^1$, $R^2$ und $R^3$ Wasserstoff, Alkyl-, Alkoxy-, Cycloalkyl-, Alkenyl-, Aryl-, Arylen- oder Alkylengruppen mit 1 - 12 C-Atomen sind, und/oder

$a_{33}$) eines Amid-Gruppen enthaltenden Monomeren mit einer polymerisierbaren Doppelbindung, und/oder

$a_{34}$) eines Lactam-Gruppen enthaltenden Monomeren mit einer polymerisierbaren Doppelbindung, und/oder

$a_3$5) eines Halbesters oder Halbamids einer $\alpha,\beta$-ungesättigten Dicarbonsäure

$a_4$) 0 - 80 Gew.% weiterer pfropfaktiver Monomerer und

$a_5$) 0 - 20 Gew.% eines Radikalstarters,

wobei sich die Gew.% der Komponenten ($a_1$) bis ($a_5$) zu 100 Gew.% ergänzen, und

A2) 1 bis 30 Gew.% einer Phosphor gebunden enthaltenden Verbindung, wobei die Gew.% bezogen sind auf das Gesamtgewicht der Komponente (A),

B) 90 bis 10 Gew.% der Komponente (B), die besteht aus

B1) 80 bis 99 Gew.% mindestens eines Polyamids und

B2) 1 bis 20 Gew.% mindestens einer einen Triazinrest gebunden enthaltenden Verbindung aus der Gruppe der Cyanursäure und -derivate, wobei die Gew.% bezogen sind auf das Gesamtgewicht der Komponente (B),

C) 0 bis 30 Gew.% mindestens eines schlagzäh modifizierenden Kautschuks und

D) 0 bis 60 Gew.% mindestens eines Zusatzstoffs,

wobei sich die Summe der Gew.% der Komponenten (A) bis (D) zu 100 Gew.% ergänzen.

Die Zusammensetzung bevorzugter Formmassen dieser Art sind den Unteransprüchen 2 bis 6 zu entnehmen.

Gegenstände der Erfindung sind ferner die Verwendung der selbstverlöschenden, thermoplastischen Polyphenylenether-Polyamid-Formmassen nach den Ansprüchen 1 bis 6 zur Herstellung von Formkörpern sowie Formkörper, hergestellt aus den selbstverlöschenden, thermoplastischen Polyphenylenether-Polyamid-Formmassen nach den Ansprüchen 1 bis 6.

Zu den zur Herstellung der erfindungsgemäßen selbstverlöschenden, thermoplastischen Polyphenylenether-Polyamid-Formmassen geeigneten Ausgangskomponenten ist folgendes auszuführen:

A) Als Komponente (A) enthalten die erfindungsgemäßen Formmassen, 10 bis 90 Gew.%, vorzugsweise 20 bis 80 Gew.% und insbesondere 30 bis 70 Gew.% einer Mischung die besteht aus

A1) 70 bis 99 Gew.%, vorzugsweise 80 bis 98 Gew.% mindestens eines modifizierten Polyphenylenethers (A1), der aus den Komponenten a1, a2, a3 und gegebenenfalls a4 und a5 hergestellt wird, und

A2) 1 bis 30 Gew.%, vorzugsweise 2 bis 20 Gew.% einer Phosphor enthaltenden Verbindung, wobei die Gew.% der Mischung bezogen sind auf das Gesamtgewicht der Komponenten (A1) und (A2).

Unter "modifizierten" Polyphenylenethern (A1), im folgenden auch abgekürzt "PPE" genannt, soll dabei eine durch die Umsetzung der Komponenten (a1) bis (a5) hervorgerufene Veränderung des Polyphenylenethers (a1) verstanden werden.

Bei der Komponente ($a_1$) handelt es sich um an sich bekannte Polyphenylenether, die beispielsweise durch oxidative Kupplung aus in o-Position disubstituierten Phenolen hergestellt werden können. Vorzugsweise werden solche Polyphenylenether eingesetzt, die mit vinylaromatischen Polymeren verträglich, d.h. ganz oder weitgehend in diesen Polymeren löslich sind (vgl. A. Noshay, Block Copolymers, S. 8 bis 10, Academic Press, 1977 und O. Olabisi, Polymer-Polymer Miscibility, S. 117 bis 189, Academic Press, 1979).

Der Anteil der Komponente ($a_1$), bezogen auf die Summe der Komponenten ($a_1$) bis ($a_5$) beträgt 4,95 bis 99,95, vorzugsweise 10 bis 99,95 und insbesondere 50 bis 90 Gew.%.

Die eingesetzten Polyphenylenether weisen im allgemeinen ein Molekulargewicht (Gewichtsmittelwert) im Bereich von 10.000 bis 80.000, vorzugsweise von 15.000 bis 60.000 auf.

Nur beispielsweise seien hier einige Polyphenylenether aufgeführt, wie sie u.a. von O. Olabisi, l.c., S. 224 bis 230 und 245 genannt werden, wie Poly(2,6-diethyl-1,4-phenylen)oxid, Poly(2-methyl-6-ethyl-1,4-phenylen)oxid, Poly(2-methyl-6-propyl-1,4-phenylen)oxid, Poly-(2,6-dipropyl-1,4-phenylen)oxid, Poly(2-ethyl-6-propyl-1,4-phenylen)oxid, bevorzugt Poly(2,6-dimethyl-1,4-phenylen)oxid oder Copolymere, wie solche, die 2,3,6-Trimethylphenol enthalten, außerdem Polymermischungen. Besonders bevorzugt ist jedoch Poly-(2,6-dimethyl-1,4-phenylen)oxid.

Die Komponente ($a_2$), die gegebenenfalls am Aufbau des modifizierten Polyphenylenethers beteiligt ist, ist ein vinylaromatisches Polymer, das vorzugsweise mit dem eingesetzten Polyphenylenether verträglich ist.

Das Molekulargewicht (Gewichtsmittel) dieser Polymere liegt im allgemeinen im Bereich von 1500 bis 2.000.000, vorzugsweise im Bereich von 70.000 bis 1.000.000.

Beispiele für bevorzugte, mit Polyphenylenethern verträgliche vinylaromatische Polymere sind der bereits erwähnten Monographie von Olabisi. S. 224 bis 230 und 245 zu entnehmen. Nur stellvertretend seien hier vinylaromatische Polymere aus Styrol, Chlorstyrol, $\alpha$-Methylstyrol, p-Methylstyrol genannt; in untergeordneten Anteilen (vorzugsweise nicht mehr als 20, insbesondere nicht mehr als 8 Gew.%), können auch Comonomere wie (Meth)acrylnitril oder (Meth)acrylsäureester am Aufbau beteiligt sein. Ein besonders bevorzugtes vinylaromatisches Polymeres ist Polystyrol. Es versteht sich, daß auch Mischungen dieser Polymere eingesetzt werden können.

Verfahren zur Herstellung solcher vinylaromatischer Polymerer sind an sich bekannt und in der Literatur beschrieben, so daß sich hier nähere Angaben erübrigen.

Nur beispielsweise seien hier als geeignete Polymerisationsverfahren die Masse-, Suspensions-, Emulsions- oder Lösungspolymerisation erwähnt.

Der Anteil des vinylaromatischen Polymeren ($a_2$) an der Komponente A1) liegt im Bereich von 0 bis 90, vorzugsweise 0 bis 70 und insbesondere 0 bis 60 Gew.%.

Bei Verwendung von Fumarsäure ($a_{31}$) als Bestandteil ($a_3$) hat es sich häufig als vorteilhaft erwiesen, wenn die Formmassen einen gewissen Mindestgehalt an vinylaromatischem Polymeren ($a_2$), vorzugsweise mindestens 1,95 Gew.%, insbesondere mindestens 4,95 Gew.%, bezogen auf die Komponente (A1) enthalten.

Als wesentliche Komponente ($a_3$) enthalt der modifizierte Polyphenylenether (A1) mindestens eine der Verbindungen ($a_{31}$) bis ($a_{35}$)
Prinzipiell können auch Mischungen verschiedener Verbindungen ($a_{31}$) bis ($a_{35}$) eingesetzt werden, doch ist im allgemeinen die Verwendung nur einer dieser Verbindungsarten vorteilhaft.

Bei der Komponente ($a_{31}$) handelt es sich um Fumarsäure, die besonders bevorzugt Anwendung findet. Ihr Anteil beträgt 0,05 bis 10 Gew.%, vorzugsweise 0,1 bis 5 Gew.%, bezogen auf die Summe der Komponenten ($a_1$) bis ($a_5$).

Die Komponenten ($a_{32}$) sind Maleinimide der allgemeinen Formel I

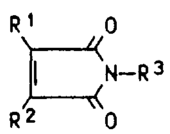

(I),

wobei $R^1$, $R^2$ und $R^3$ Wasserstoffatome, Alkyl-, Alkoxy-, Cycloalkyl-, Alkenyl-, Aryl-, Arylen- oder Alkylengruppen mit 1 bis 12 C-Atomen sind.

Vorzugsweise sind die Substituenten $R^1$, $R^2$ und $R^3$ Alkylgruppen mit 1 bis 4 C-Atomen, beispielsweise Methyl-, Ethyl- oder n-, i- oder t-Butylgruppen, Cycloalkylgruppen mit bis zu 8 C-Atomen, inbesondere mit 5 oder 6 C-Atomen oder Phenylgruppen, die gegebenenfalls mit Alkyl- oder Alkoxygruppen substituiert sein können.

Nur beispielhaft seien als bevorzugte Maleinimide N-Methylmaleinimid, N-Butylmaleinimid, N-Cyclohexylmaleinimid, N-Phenylmaleinimid. N-(p-Methylphenyl)maleinimid, N-(3,5-Dimethylphenyl)maleinimid, N-(p-Methoxyphenyl)maleinimid, N-Benzylmaleinimid, N-(1-Naphthyl)maleinimid oder Mischungen davon genannt. Von diesen wird N-Phenylmaleinimid besonders bevorzugt.

Der Anteil des Maleinimids der allgemeinen Formel I beträgt 0,05 bis 10, vorzugsweise 0, 1 bis 5 Gew.%, bezogen auf die Summe der Komponenten $(a_1)$ bis $(a_5)$.

Ebenfalls geeignet als Komponente $(a_3)$ sind Amidgruppen enthaltende Monomere mit mindestens einer polymerisierbaren Doppelbindung, vorzugsweise solche der allgemeinen Formeln II oder III

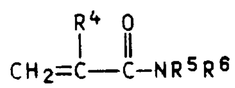

(II)

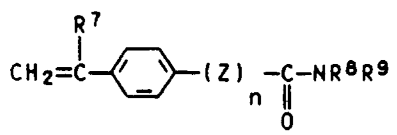

(III),

wobei $R^4$, $R^5$, $R^6$, $R^7$, $R^8$ und $R^9$ Wasserstoffatome, Alkyl- oder Alkoxygruppen mit 1 bis 12 C-Atomen, Cycloalkylgruppen mit bis zu 12 C-Atomen oder Arylgruppen und Z Alkylengruppen mit 1 bis 12 C-Atomen darstellen und n den Wert 0 oder 1, vorzugsweise 0 hat.

Bevorzugte Substituenten $R^5$, $R^6$, $R^8$ und $R^9$ sind Alkylgruppen mit 1 bis 10 C-Atomen, Cycloalkylgruppen mit bis zu 8 C-Atomen, insbesondere mit 5 oder 6 C-Atomen oder Arylgruppen, vorzugsweise die Phenylgruppe. $R^4$ und $R^7$ sind bevorzugt ein Wasserstoffatom oder eine Methylgruppe.

Beispielhaft seien hier Acrylamid, N-Methyl-, N-Ethyl-, N-Propyl-, N-Butyl-, N-Pentyl-, N-Hexyl-, N-Heptyl-, N-Octyl-, N-Nonyl-, N-(2-ethylhexyl)-acrylamid, N-Cyclohexylacrylamid, N-Phenylacrylamid, die entsprechenden N,N-Derivate wie N,N-Dimethylacrylamid und die entsprechenden Methacrylamide sowie deren Mischungen genannt.

Bevorzugt werden Acrylamid, Methacrylamid, N-Phenylacrylamid und N-Phenylmethacrylamid verwendet.

Der Anteil der Komponente $(a_{33})$ beträgt 0,05 bis 10, vorzugsweise 0,1 bis 10, insbesondere 1 bis 5 Gew.%, bezogen auf die Summe der Komponenten $(a_1)$ bis $(a_5)$.

Als Komponente $(a_3)$ kann auch ein Lactam-Gruppen enthaltendes Monomer mit mindestens einer polymerisierbaren Doppelbindung $(a_{34})$ eingesetzt werden.

Vorzugsweise werden Lactame der allgemeinen Struktur IV

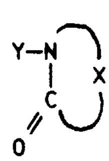

(IV)

eingesetzt, wobei X eine lineare oder verzweigte Alkylengruppe mit 2 bis 15 C-Atomen darstellt und Y die allgemeine Formel

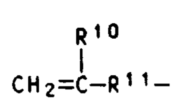

hat,
wobei $R^{10}$ ein Wasserstoffatom, eine Alkyl- oder Alkoxygruppe mit 1 bis 4 C-Atomen und $R^{11}$ einen zweibindigen Substituenten mit der Formel

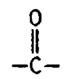 , 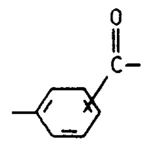 oder 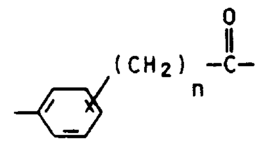 ,

wobei n eine ganze Zahl von 1 bis 4 ist, darstellen.

Bevorzugte Substituenten Y sind ganz allgemein Vinyl-, Acryloyl-, Methacryloyl- oder Reste mit Styrol-Grundstrukturen.

Besonders bevorzugt sind Lactameinheiten, die zu Polyamiden polymerisierbar oder copolymerisierbar sind, wie dies in Houben-Weyl, Methoden der organ. Chemie, Band X/2, S. 511 bis 587, (1958) und Band XIV/2. S. 111 bis 131, beschrieben wird.

Beispielsweise seien genannt:
β-Propiolactame (Azetidin-2-one), wie

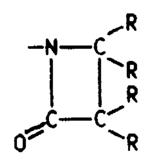

wobei R gleiche oder verschiedene Alkylgruppen mit 1 bis 6 C-Atomen oder Wasserstoffatome sind. Derartige Verbindungen sind beschrieben bei R. Graf, Angewandte Chemie, 74, 523 bis 530, (1962) und H. Bastian, Angewandte Chemie. 80, 304 bis 312, (1968).

Nur beispielhaft sei als ein Vertreter dieser Gruppe 3,3'-Dimethyl-3-propiolactam genannt.

Ebenfalls bevorzugte Lactam-Einheiten sind 2-Methylpyrrolidone

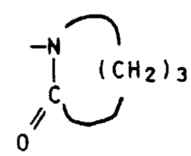

ε-Caprolactam, wie

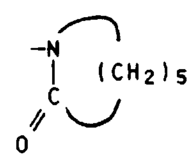

und außerdem 7-Önantholactam, 8-Capryllactam und 12-Laurinlactam wie sie bei K. Dachs, Angewandte Chemie, 74, 540 bis 545, (1962) beschrieben werden. Insbesondere bevorzugt sind 2-Pyrrolidone und ε-Caprolactame.

Es können auch Mischungen dieser Verbindungen eingesetzt werden.

Vorzugsweise sind die Lactameinheiten über eine Carbonylgruppe am Stickstoff in den Polyphenylenether (A1) eingebaut, wie dies nachstehend allgemein dargestellt ist.

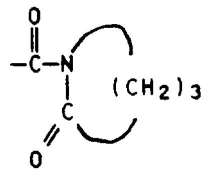

Als besonders bevorzugtes Beispiel einer Komponente ($a_{34}$) sei hier nur N-(Meth)acryloyl-ε-caprolactam

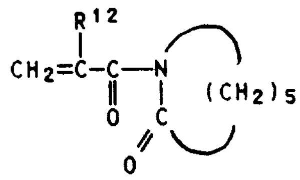

genannt,
wobei $R^{12}$ ein Wasserstoffatom oder eine Methylgruppe sein kann.

Der Anteil der Komponente ($a_{34}$) beträgt 0,05 bis 10, vorzugsweise 0,1 bis 10 und insbesondere 0,5 bis 5 Gew.%, bezogen auf die Summe der Komponenten ($a_1$) bis ($a_5$).

Bei der Komponente ($a_{35}$) handelt es sich um Halbester oder Halbamide von $\alpha,\beta$-ungesättigten Dicarbonsäuren. Als Beispiele für bevorzugte Dicarbonsäuren seien Maleinsäure, Fumarsäure, Chlormaleinsäure. Dichlormaleinsäure, Methylmaleinsäure, Butenylbernsteinsäure und Tetrahydrophthalsäure genannt, von denen Maleinsäure und Fumarsäure besonders bevorzugt werden.

Zur Herstellung geeigneter Halbester oder Halbamide können diese Säuren oder deren Anhydride mit den entsprechenden Alkoholen bzw. Aminen umgesetzt werden. Entsprechende Verfahren sind an sich bekannt und in der Literatur beschrieben, so daß sich hier nähere Angaben erübrigen.

Als Alkohole zur Herstellung der Halbester werden bevorzugt primäre und sekundäre Monoalkohole, wie Methanol, Ethanol, n- und i-Propanol, n- und i-Butanol, Pentanole, Hexanole, Heptanole, Octanole, z.B. 2-Ethylhexylalkohol und höhere Alkohole wie Dodecanole und cycloaliphatische Alkohole, z.B. Cyclohexanol eingesetzt. Weiter eignen sich auch Alkohole mit aromatischen Struktureinheiten wie z.B. Benzylalkohol. Neben C, H und O können die Alkohole auch Heteroatome - in der Hauptkette oder als Substituenten - wie N, O, S und Si enthalten. Schließlich seien auch Alkohole mit Ketogruppen in der Kette oder mit Halogensubstituenten erwähnt. Bevorzugt verwendet werden jedoch Alkanole mit 1 bis 6 C-Atomen.

Als Amine zur Herstellung der Halbamide seien ganz allgemein sekundäre Amine und N-Alkylaniline genannt. Beispiele hierfür sind N-Methyl- oder N-Ethylalkylamine oder N-Methylanilin. Wie die Alkohole können die Amine auch Heteroatome und funktionelle Gruppen enthalten.

Ganz allgemein werden Halbester den Halbamiden vorgezogen. Der Anteil von ($a_{35}$) beträgt 0,05 bis 10, vorzugsweise 0,1 bis 5 Gew.%, bezogen auf das Gesamtgewicht der Komponente (A1).

Formmassen, die die Komponente ($a_{35}$) enthalten, weisen häufig besonders gute Fließeigenschaften, d.h. besonders hohe Schmelzindex-Werte (MFI) auf.

Gegebenenfalls können bei der Herstellung des modifizierten Polyphenylenethers (A1) auch weitere Comonomere ($a_4$) eingesetzt werden, die unter den Herstellungsbedingungen mit den Komponenten ($a_1$) und gegebenenfalls ($a_2$) reagieren bzw. auf diese aufpfropfen. Beispielsweise seien hier Acrylsäure, Methacrylsäure, Acrylate, Methacrylate und vinylaromatische Monomere wie Styrol, $\alpha$-Methylstyrol und Vinyltoluol genannt, um nur einige aufzuführen.

Der Anteil der Komponente ($a_4$) betragt 0 bis 80, vorzugsweise 0 bis 45 und insbesondere nicht mehr als 20 Gew.%, bezogen auf die Summe der Komponenten ($a_1$) bis ($a_5$). Besonders bevorzugt werden Formmassen, die keine Komponente ($a_4$) enthalten.

Als Komponente ($a_5$) können bei der Herstellung der modifizierten Polyphenylenether (A1) bis zu 20 Gew.% an Radikalstartern eingesetzt werden.

Der Anteil der Komponente ($a_5$) ist in der Regel geringer als die Summe der Anteile der Komponenten ($a_3$) und ($a_4$). Vorzugsweise handelt es sich dabei um ein organisches Peroxid oder eine Azo-Verbindung.

Besonders bevorzugt sind organische Peroxide mit einer Halbwertszeit im Bereich von 1 bis 30 sec. bei 200 °C. Die Wahl des Radikalstarters richtet sich nach der gewünschten Reaktionstemperatur.

Beispielsweise seien als Radikalstarter genannt:
Di-(2,4-dichlorbenzoyl)peroxid, tert.-Butylperoxid, Di-(3,5,5-trimethylhexanol)peroxid, Dilauroylperoxid. Didecanoylperoxid, Dipropionylperoxid, Dibenzoylperoxid. tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvaleriansäure-butylester. 2,2-Ditert.-butylperoxybutan, Dicumylperoxid, tert.-Butylcumylperoxid. 1,3-Di(tert.-butylperoxyisopropyl)benzol, Di-tert.-butylperoxid, Di-isopropylbenzolmonohydroperoxid, Cumolhydroperoxid, tert.-Butylhydroperoxid, 2,2-Azo-di(2,4-dimethylvaleronitril), Azo-bis-isobutyronitril, wobei Dicumylperoxid besonders bevorzugt wird.

Häufig hat es sich als vorteilhaft erwiesen, ohne die Komponente ($a_5$) zu verfahren. Dies gilt insbesondere dann, wenn als Komponente ($a_3$) Fumarsäure ($a_{31}$) eingesetzt wird, da hier bei der Verwendung von Radikalstartern unter Umständen unerwünschte Nebenreaktionen auftreten können.

Zur Herstellung des modifizierten Polyphenylenethers (A1) können die Komponenten ($a_1$) bis ($a_5$) bei 250 bis 350 °C, vorzugsweise 265 bis 295 °C, miteinander umgesetzt werden. Hierzu eignen sich besonders Extruder, da in diesen im allgemeinen auch eine gute Durchmischung der Komponenten erzielt wird. Die Verweilzeiten liegen im allgemeinen im Bereich von 0,5 bis 30 min., vorzugsweise von 1 bis 3 min. Besonders gut für das beschriebene Verfahren eignen sich Zweischneckenextruder.

Nachstehend wird eine besonders bevorzugte Verfahrensvariante beschrieben.

Die Komponenten ($a_1$) bis ($a_5$) werden vorzugsweise gemeinsam eindosiert und in einem Aufschmelzteil aufgeschmolzen. Die Extruderschnecke im Aufschmelzteil enthält bevorzugt Knetelemente. An die Aufschmelzzone schließt sich die Reaktionszone an, die bevorzugt Knetelemente und zusätzlich Knetelemente mit nachgeschaltetem rückwärts förderndem Gewinde enthält. Vor dem Produktaustrag befindet sich bevorzugt eine Entgasungszone zur Entfernung der flüchtigen Bestandteile. Die ausgetragene Schmelze wird im allgemeinen granuliert und das Granulat wird zur Herstellung der erfindungsgemäßen Formmassen eingesetzt.

Prinzipiell ist die Herstellung des modifizierten Polyphenylenethers (A1) auch in jedem Reaktionsgefäß, welches eine Reaktion der Komponenten miteinander ermöglicht, durchführbar.

Manchmal ist es vorteilhaft, wenn die modifizierten Polyphenylenether (A1) zusätzlich einen nichtmodifizierten Polyphenylenether enthalten. Dieser entspricht bevorzugt dem als Komponente ($a_1$) eingesetzten Polyphenylenether, weshalb hier auf die dortigen Ausführungen zu geeigneten Verbindungen verwiesen wird. Der Anteil an nichtmodifizierten Polyphenylenether beträgt, falls vorhanden, maximal 90, vorzugsweise weniger als 50 Gew.%, bezogen auf das Gesamtgewicht an modifiziertem und nichtmodifiziertem Polyphenylenether.

A2) Zur Flammfestausrüstung enthält die Komponente (A) erfindungsgemäß als Flammschutzadditiv mindestens eine Phosphor gebunden enthaltende Verbindung (A2).

Es handelt sich dabei um organische und anorganische Phosphorverbindungen, in denen der Phosphor die Wertigkeitsstufe -3 bis +5 besitzt. Unter der Wertigkeitsstufe soll der Begriff "Oxidationsstufe" verstanden werden, wie er im Lehrbuch der Anorganischen Chemie von A.F. Hollemann und E. Wiberg, Verlag Walter de Gruyter und Co. (1964, 57. bis 70. Auflage), Seite 166 bis 177, wiedergegeben ist. Phosphorverbindungen der Wertigkeitsstufen -3 bis +5 leiten sich von Phoshin (-3), Diphosphin (-2), Phosphinoxid (-1), elementarem Phosphor (±0), hypophosphoriger Säure (+1), phosphoriger Säure (+3), Hypodiphosphorsäure (+4) und Phosphorsäure (+5) ab.

Aus der großen Zahl von phosphorhaltigen Verbindungen seien nur einige Beispiele erwähnt.

Beispiele für Phosphorverbindungen der Phosphin-Klasse, die die Wertigkeitsstufe -3 aufweisen, sind aromatische Phosphine, wie Triphenylphosphin. Tritolylphosphin, Trinonylphosphin, Trinaphthylphosphin u.a.. Besonders geeignet ist Triphenylphosphin.

Beispiele für Phosphorverbindungen der Diphosphinklasse, die die Wertigkeitsstufe -2 aufweisen, sind Tetraphenyldiphosphin, Tetranaphthyldiphosphin u.a.. Besonders geeignet ist Tetranaphthyldiphosphin.

Phosphorverbindungen der Wertigkeitsstufe -1 leiten sich vom Phosphinoxid ab. Beispiele sind Triphenylphosphinoxid, Tritolylphosphinoxid, Trinonylphosphinoxid oder Trinaphthylphosphinoxid. Bevorzugt ist Triphenylphosphinoxid.

Phosphor der Wertigkeitsstufe ±0 ist der elementare Phosphor. In Frage kommen roter und schwarzer Phosphor. Bevorzugt ist roter Phosphor.

Phosphorverbindungen der "Oxidationsstufe" +1 sind z.B. Hypophosphite. Sie können Salzcharakter haben oder rein organischer Natur sein.

Beispiele sind Caliumhypophosphit und Magnesiumhypophosphit, daneben auch komplexe Hypophosphite oder Doppelhypophosphite, oder organische Hypophosphite wie Cellulosehypophosphitester oder Ester der hypophosphorigen Säuren mit Diolen, wie z.B. von 1,10-Dodecyldiol. Auch substituierte Phosphinsäuren und deren Anhyride, wie z.B. Diphenylphosphinsäure, können eingesetzt werden. Auch Melaminhypophosphit ist geeignet. Des weiteren kommen in Frage Diphenylphosphinsäure, Di-p-Tolylphosphinsäure, Di-Kresylphosphinsäureanhydrid. Es kommen aber auch Verbindungen wie Hydrochinon-, Ethylenglykol-, Propylenglykol-bis(diphenylphosphinsäure)ester u.a. in Frage. Ferner sind geeignet Aryl(Alkyl)-phosphinsäureamide, wie z.B. Diphenylphosphinsäure-dimethylamid und Sulfonamidoaryl(alkyl)-phosphinsäurederivate, wie z.B. p-Tolylsulfonamidodiphenylphosphinsäure. Bevorzugt eingesetzt werden Hydrochinon- und Ethylenglykol-bis-(diphenylphosphinsäure)ester.

Phosphorverbindungen der Oxidationsstufe +3 leiten sich von der phosphorigen Säure ab. Geeignet sind cyclische Phosphonate, die sich vom Pentaerythrit, Neopentylglykol oder Brenzkatechin ableiten. Ferner ist Phosphor der Wertigkeitsstufe +3 in Triaryl(alkyl)phosphiten, wie z.B. Triphenylphosphit. Tris-(4-decylphenyl)phosphit, Tris(2,4-di-tert.-butylphenyl)phosphit oder Phenyldidecylphosphit u.a. enthalten. Es kommen aber auch Diphosphite, wie z.B. Propylenglykol-1,2-bis(diphosphit) oder cyclische Phosphite, die sich vom Pentaerythrit, Neopentylglykol oder Brenzkatechin ableiten, in Frage.

Besonders bevorzugt werden Methylneopentylphosphonat (Methanphosphonsäuremethylester) und -phosphit sowie Dimethylpentaerythritdiphosphonat und -phosphit.

Als Phosphorverbindungen der Oxidationsstufe +4 kommen vor allem Hypodiphosphate, wie z.B. Tetraphenylhypodiphosphat oder Bisneopentylhypodiphosphat in Betracht.

Als Phosphorverbindungen der Oxidationsstufe +5 kommen vor allem alkyl- und arylsubstituierte Phosphate in Betracht. Beispiele sind Phenylbisdodecylphosphat, Phenylethylhydrogenphosphat, Phenyl-bis(3,5,5-trimethylhexyl)phosphat, Ethyldiphenylphosphat, 2-Ethylhexyldi(tolyl)phosphat, Diphenylhydrogenphosphat,Bis(2-ethylhexyl)-p-tolylphosphat, Tritolylphosphat, Bis(2-ethylhexyl)-phenylphosphat, Di(nonyl)-phenylphosphat, Phenylmethylhydrogenphosphat, Di(dodecyl)-p-tolylphosphat, p-Tolyl-bis(2,5,5-trimethylhexyl)phosphat oder 2-Ethylhexyldiphenylphosphat. Besonders geeignet sind Phosphorverbindungen, bei denen jeder Rest ein Aryloxi-Rest ist. Ganz besonders geeignet ist dabei Triphenylphosphat.

Des weiteren können auch cyclische Phosphate eingesetzt werden. Besonders geeignet ist hierbei Diphenylpentaerythritdiphosphat und Phenylneopentylphosphat.

Außer den oben angeführten niedermolekularen Phosphorverbindungen kommen noch oligomere und polymere Phosphorverbindungen in Frage.

Solche polymeren, halogenfreien organischen Phosphorverbindungen mit Phosphor in der Polymerkette entstehen beispielsweise bei der Herstellung von pentacyclischen, ungesättigten Phosphindihalogeniden, wie sie beispielsweise in der DE-OS 20 36 173 beschrieben ist. Das Molekulargewicht, gemessen durch Dampfdruckosmometrie in Dimethylformamid, der Polyphospholinoxide soll im Bereich von 500 bis 7000, vorzugsweise im Bereich von 700 bis 2000 liegen.

Der Phosphor besitzt hierbei die Oxidationsstufe -1.

Ferner können anorganische Koordinationspolymere von Aryl(Alkyl)-phosphinsäuren, wie z.B. Poly-[natrium(I)-methylphenylphosphinat], eingesetzt werden. Ihre Herstellung wird in DE-OS 31 40 520 angegeben. Der Phosphor besitzt die Oxidationszahl +1.

Weiterhin können solche halogenfreien polymeren Phosphorverbindungen eingesetzt werden, die durch die Reaktion eines Phosphonsäurechlorids, wie z.B. Phenyl-, Methyl-, Propylphosphonsäuredichlorid mit bifunktionellen Phenolen, wie z.B. Hydrochinon, Resorcin, 2,3,5-Trimethylhydrochinon, Bisphenol-A, Tetramethylbisphenol-A entstehen.

Weitere halogenfreie polymere Phosphorverbindungen, die sich als Flammschutzadditive eignen, werden durch Reaktion von Phosphoroxidtrichlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag Stuttgart, Organische Phosphorverbindungen Teil II (1963)). Ferner können halogenfreie polymere Phosphonate durch Umesterungsreaktionen von Phosphonsäureestern mit bifunktionellen Phenolen (vgl. DE-OS 29 25 208) oder durch Reaktionen von Phosphonsäureestern mit Diaminen oder Diamiden oder Hydraziden (vgl. US-PS 4 403 075) hergestellt werden. In Frage kommt aber auch das anorganische Poly(ammoniumphosphat).

Es können aber auch oligomere Pentaerythritphosphite, -phosphate und -phosphonate gemäß EP-PS 8 486, z.B. Mobil Antiblaze® 19 (eingetragenes Warenzeichen der Firma Mobil Oil) verwendet werden.

Besonders bewährt haben sich und daher bevorzugt zum Einsatz gelangen Dimethylpentaerythritdiphosphonat, Methylneopentylphosphat (Methanphosphonsäureneopentylester), Mobil Antiblaze 19 und insbesondere Triphenylphosphinoxid und/oder Triphenylphosphat.

Die Aufbaukomponenten (A1) und (A2) der Komponente (A) können in den genannten Mengen einzeln zugeführt und direkt mit den Aufbaukomponenten (B) und gegebenenfalls (C) und (D) z.B. in einem Extruder, vorzugsweise einem Ein- oder Zweischneckenextruder, zu den erfindungsgemäßen Polyphenylenether-Polyamid-Formmassen vereinigt werden. Nach einer anderen Ausführungsform, die vorzugsweise

Anwendung findet, wird zunächst in der ersten Zone eines Extruders durch Umsetzung der Komponenten ($a_1$) bis ($a_3$) sowie gegebenenfalls ($a_4$) und/oder ($a_5$) bei Temperaturen von 240 bis 350°C, vorzugsweise 260 bis 300°C und Reaktionszeiten (mittlere Verweilzeiten im Extruder) von 0,1 bis 15 Minuten, vorzugsweise von 0,1 bis 10 Minuten und insbesondere 0,5 bis 3 Minuten, der modifizierte Polyphenylenether (A1) hergestellt und die als Flammschutzadditive geeigneten Phosphor gebunden enthaltenden Verbindungen (A2) über eine oder mehrere Einspeiseöffnungen in die nachfolgende zweite Zone des Extruders zudosiert. Die erhaltene Schmelze wird über eine Entgasungszone und Lochdüse ausgetragen, durch ein Wasserbad gezogen und anschließend granuliert und getrocknet.

B) Als Komponente (B) enthalten die erfindungsgemäßen selbstverlöschenden, thermoplastischen Polyphenylenether-Polyamid-Formmassen 90 bis 10 Gew.%, vorzugsweise 80 bis 20 Gew.% und insbesondere 70 bis 30 Gew.% einer Mischung (B), die besteht aus

(B1) 80 bis 99 Gew.%, vorzugsweise 85 bis 95 Gew.% mindestens eines Polyamids (B1) und

(B2) 1 bis 20 Gew.%, vorzugsweise 5 bis 15 Gew.% mindestens einer einen Triazinrest gebunden enthaltenden Verbindung (B2) ausgewählt aus der Gruppe der Cyanursäure, Cyanursäurederivate und deren Mischungen, wobei die Gew.% bezogen sind auf das Gesamtgewicht der Komponenten (B1) und (B2).

Als Komponente (B1) geeignet sind lineare Polyamide z.B. mit einer relativen Viskosität von 2,2 bis 4,5, gemessen in 1 gew.-%iger Lösung in 96 gew.-%iger Schwefelsäure bei 23°C. Bevorzugt seien genannt Polyamide, die sich von Lactamen mit 7 bis 13 Ringgliedern ableiten, wie Polycaprolactam, Polycapryllactam oder Polylaurinlactam sowie Polyamide, die durch Umsetzung von Dicarbonsäuren mit Diaminen erhalten werden. Geeignete Dicarbonsäuren sind beispielsweise Alkandicarbonsäuren mit 6 bis 12, insbesondere 6 bis 10 Kohlenstoffatomen sowie Terephthalsäure und Isophthalsäure sowie beliebige Mischungen dieser Säuren.

Als Diamine, seien beispielsweise Alkandiamine mit 6 bis 12, insbesondere 6 bis 8 Kohlenstoffatomen, ferner m-Xylylendiamin, Bis(4-aminophenyl)methan, Bis-(4-aminocyclohexyl)methan oder Bis(4-aminophenyl)propan-2,2 oder deren Mischungen genannt.

Es ist auch möglich und manchmal vorteilhaft Mischungen der genannten Polyamide zu verwenden. Besondere technische Bedeutung haben Polyamid-6 (Polycaprolactam), Polyamid-11, Polyamid-12, Polyamid-66 (Polyhexamethylenadipinamid) sowie Polyamide, die aus Hexamethylendiamin und Isophthalsäure sowie Terephthalsäure aufgebaut sind, erlangt.

Als Komponente (B1) besonders bewährt hat sich und daher insbesondere eingesetzt wird eine Polycaprolactam mit einem Molekulargewicht/Gewichtsmittel) von 10.000 bis 80.000, insbesondere von 10.000 bis 70.000 sowie Polyamid-6.6, Polyamid-11 und Polyamid-12.

B2) Zur Flammfestausrüstung enthält die Komponente (B) und damit insbesondere die erfindungsgemäße Formmasse mindestens eine Triazinverbindung, ausgewählt aus der Gruppe der Cyanursäure, Cyanursäurederivate oder Mischungen davon. Als Cyanursäurederivate seien beispielsweise genannt: Melamin, Melam, Melem, Melamincyanurat, Methylendimelamin, Ethylendimelamin und p-Xylylidendimelamin.

Vorzugsweise Anwendung finden Cyanursäure und insbesondere Melamin und/oder Melamincyanurat, die zweckmäßigerweise in durchschnittlichen Teilchengrößen von kleiner als 100 µm und vorzugsweise von ungef. 1,5 bis 30 µm eingesetzt werden.

Als Cyanursäurederivate eignen sich beispielsweise auch Salze aus Melamin und anorganischen Säuren, z.B. Melaminphosphat, Reaktionsprodukte des Melamins mit Triazolidin-3,5-dionen oder Barbitursäurederivaten und Formaldehyd sowie Melamin in Verbindung mit thermoplastischen Polyacetalen, beispielsweise gemäß DE-A-32 48 330.

Die Aufbaukomponenten (B1) und (B2) der Komponente (B) können analog den Aufbaukomponenten (A1) und (A2) der Komponente (A) in den genannten Mengen einzeln zugeführt und direkt mit den Aufbaukomponenten (A) bzw. (A1) und (A2) und gegebenenfalls (C) und (D), z.B. in einem Extruder zu den erfindungsgemäßen Polyphenylenether-Polyamid-Formmassen vereinigt werden.

Die Komponente (B) kann jedoch auch getrennt durch Mischen der Komponenten (B1) und (B2) bei Temperaturen im Bereich von 150 bis 350°C, vorzugsweise von 250 bis 320 in üblichen Mischvorrichtungen, wie z.B. Knetern, Banburymischern, Ein- oder Zweischneckenextrudern hergestellt und anschließend direkt oder nach einer Zwischenlagerung zu den erfindungsgemäßen Formmassen weiterverarbeitet werden.

(C) Als weiteren Bestandteil (C) können die erfindungsgemäßen, selbstverlöschenden, thermoplastischen Polyphenylenether-Polyamid-Formmassen gegebenenfalls in einer Menge bis zu 30 Gew.%, vorzugsweise von 2 bis 25 Gew.% und insbesondere von 5 bis 20 Gew.%, bezogen auf die Summe der Komponenten (A) bis (C) und gegebenenfalls (D) mindestens einen schlagzäh modifizierenden Kautschuk mit einer Glastemperatur unter 0°C, vorzugsweise unter -20°C enthalten. Derartige schlagzäh

modifizierende Kautschuke sind dem Fachmann als schlagzähes Polystyrol (HIPS) oder ABS bekannt. Dabei werden die vinylaromatischen Polymeren in Gegenwart eines die Schlagzähigkeit verbessernden Zusatzes (Schlagzähmodifiers) hergestellt oder die vinylaromatischen Polymeren mit gepfropften Kautschuken abgemischt. Als kautschukartige Polymere seien z.B. genannt Polybutadien-, Styrol-Butadien-, Styrol-b-Butadien, Acrylnitril-Butadien, Ethylen-Propylen-, Polyacrylat und Polyisopren-Kautschuke.

Die Kautschuke können in an sich bekannter Weise hergestellt werden, wobei die Zugabereihenfolge der einzelnen Monomeren in bekannter Art modifiziert werden kann. So ist es bei der Herstellung durch Emulsionspolymerisation möglich, zuerst das Butadien, gegebenenfalls unter Zusatz von Styrol, Acrylnitril, (Meth)acrylester sowie gegebenenfalls unter Zusatz von geringen Mengen Vernetzer zu polymerisieren, und anschließend auf die so gewonnene Pfropfgrundlage andere Monomere oder Gemische, wie (Meth)acrylsäureester, Acrylnitril, Styrol oder andere polymerisierbare Monomere aufzupfropfen.

Neben den als Komponente (C) gegebenenfalls vorhandenen, gepfropften Kautschuken, wie z.B. Polybutadien-Kautschuk, Acrylat-Kautschuk, Styrol-Butadien-Kautschuk, Polybuten-Kautschuk, hydrierten Styrol-Butadien-Kautschuk, Acrylnitril-Butadien-Kautschuk, Ethylen-Propylen-Kautschuk, Polyisopren-Kautschuk können diese auch ungepfropft zur Verbesserung der Schlagzähigkeit zugesetzt werden. Als Kautschuke für diesen Zweck seien weiter genannt styrolgepfropfte Ethylen-Propylen-Kautschuke, thermoplastische Ethylen-Propylen-Kautschuke, thermoplastische Polyester-Elastomere, Ethylenkautschuke und Ionomere, und insbesondere Styrol-Butadien-Blockcopolymere einschließlich AB-, ABA-, ABAB-verschmiert (taper)-Blockcolymere, Stern-Blockcopolymere und ähnliche, analoge Isoprenblockpolymerisate sowie teilweise oder vollständig hydrierte Blockcopolymere.

Geeignet sind ferner Kautschuke, die die Polyamidphase schlagzäh modifizieren; derartige Kautschuke werden beispielsweise beschrieben in "Polymermodifizierte Polyamide" von F. Fahnler und J. Merten (Kunststoffe, 75 (1985), Seiten 157 bis 163), "Polyamide" von H. Kalsch (Plastverarbeiter, 33 (1982), Seiten 1065 bis 1069), der EP-A-01 44 767 und der EP-A-234 390 Anwendung finden insbesondere Ethylen-Acrylester-Maleinsäureanhydrid-, Ethylen-Acrylester-Acrylsäure- und Ethylen-Acrylester-Maleinsäureanhydrid-Acrylsaure-Copolymere, wobei als Acrylester vorzugsweise n-Butylacrylat, iso-Butylacrylat, tert.-Butylacrylat, 2-Ethylhexylacrylat oder Dodecylacrylat eingesetzt werden, Butadien-Kautschuke, vorzugsweise solche mit einer Pfropfhülle, die Acrylsäurereste oder tert.-Butylacrylatgruppen gebunden enthält und Ethylen-Propylen-Dien-Kautschuke, die mit 0,3 Gew.% Maleinsäureanhydrid eingesetzt wurden.

D) Zusätzlich zu den zwingend vorhandenen Komponenten (A) und (B) sowie gegebenenfalls (C) können die erfindungsgemäßen selbstverlöschenden, thermoplastischen Formmassen übliche Zusatzstoffe (D) in einer Menge von bis zu 60 Gew.%, vorzugsweise bis zu 40 Gew.% und insbesondere von 0,1 bis 35 Gew.%, bezogen auf das Gesamtgewicht der Komponenten (A) bis (D) enthalten. Solche übliche Zusatzstoffe, zu denen auch Verarbeitungshilfsmittel gehören, sind beispielsweise Hitze- und Lichtstabilisatoren, Gleit- und Entformungsmittel, Färbemittel, wie z.B. Farbstoffe und Pigmente, u.a. Weiterhin zählen hierzu Verstärkungsmittel wie z.B. Glasfasern, Kohlenstoffasern, organische Synthese- oder Naturfasern wie z.B. aromatische Polyamid- oder Polyesterfasern, Cellulosefasern u.a., und/oder Füllstoffe wie z.B. Gipsfasern, synthetische Calciumsilikate, Kaolin, calciniertes Kaolin, Wollastonit, Talkum, Kreide u.a.

Die Herstellung der erfindungsgemäßen selbstverlöschenden, thermoplastischen Polyphenylenether-Polyamid-Formmassen erfolgt zweckmäßigerweise durch Mischen der Komponenten (A), (B) und gegebenenfalls (C) und gegebenenfalls (D) bei Temperaturen im Bereich von 200 bis 350 °C, vorzugsweise von 250 bis 320 °C in üblichen Mischvorrichtungen, wie z.B. Knetern, Banburymischern und vorzugsweise Extrudern, z.B. Einschnecken- oder insbesondere Zweischneckenextrudern. Um eine möglichst homogene Formmasse zu erhalten, ist eine intensive Durchmischung notwendig, was in bekannter Weise erreicht werden kann. Die Verweilzeiten liegen im allgemeinen im Bereich von 0,5 bis 30 min, vorzugsweise von 1 bis 5 min. Die Reihenfolge des Mischens der Komponenten kann variiert werden, es können zwei oder gegebenenfalls drei Komponenten vorgemischt sein oder es können auch alle Komponenten gemeinsam gemischt werden.

Die erfindungsgemäßen Formmassen werden, wie oben ausgeführt wurde, vorzugsweise auf Ein- oder insbesondere Zweischneckenextrudern hergestellt. Diese sind vorzugsweise aus einzelnen Gehäusen zusammengesetzt, die temperierbare Mäntel aufweisen. Die Gestaltung der Schnecken unterliegt keiner Beschränkung, es können Förderelemente (mit oder ohne Schubkanten), Knetelemente und/oder Mischelemente vorhanden sein. Darüber hinaus ist es möglich und häufig vorteilhaft teilweise. d.h. abschnittsweise stauende oder rückfördernde Elemente im Extruder zu verwenden, um Verweilzeit und Mischungseigenschaften zu beeinflussen und zu steuern.

Wegen der selbstreinigenden Eigenschaften und der besseren Einstellbarkeit des Verweilzeitspektrums werden besonders bevorzugt Zweischneckenextruder mit gleichlaufenden Schnecken eingesetzt. Der Extruder ist in mindestens 2, vorzugsweise 3 oder auch mehr als 3 Zonen unterteilt.

Wie bereits zur Herstellung der Aufbaukomponente (A) dargelegt wurde, wird nach einer bevorzugt angewandten Herstellungsvariante zunächst in der ersten Zone eines Extruders, insbesondere eines Zweischneckenextruders durch Umsetzung der Komponenten ($a_1$) bis ($a_3$) sowie gegebenenfalls ($a_4$) und/oder ($a_5$) der modifizierte Polyphenylenether (A1) hergestellt und die als Flammschutzadditive geeigneten Phosphor gebunden enthaltenden Verbindungen (A2) über eine oder mehrere Einspeiseöffnungen in die nachfolgende zweite Zone des Extruders zudosiert. In analoger Weise können die Aufbaukomponenten (B) oder die Komponenten (B1) und (B2) hierfür, sowie gegebenenfalls die Aufbaukomponenten (C) und/oder (D) einzeln in einer beliebigen oder bestimmten Reihenfolge oder gemeinsam über eine oder mehrere Einspeiseöffnungen in eine oder verschiedene Extruderzonen zugegeben werden. Bevorzugt erfolgt die Dosierung mittels eines oder mehrerer Seitenextruder mit gegebenenfalls temperierbarem Mantel, in den die Aufbaukomponenten eindosiert, aufgeschmolzen und zweckmäßigerweise am Anfang der zweiten Zone des Extruder zugeführt werden.

Im allgemeinen ist der Schneckendurchmesser des Seitenextruders geringer als der des Hauptextruders und die Schneckenlänge liegt im Bereich von 5 bis 40 Durchmesser, vorzugsweise von 10 bis 20 Durchmesser. Die Temperatur des Seitenextruders bei der Dosierung in den Hauptextruder liegt im Bereich von 200 bis 350 °C, vorzugsweise von 250 bis 320 °C. Die Schnecke des Seitenextruders kann so gestaltet sein, daß die Komponenten vor der Dosierung in den Hauptextruder bereits vorgemischt sind. Vorzugsweise werden die Komponenten im Seitenextruder aufgeschmolzen.

Die Zone des Hauptextruders, in denen dann der modifizierte Polyphenylenether (A1) mit den aus dem Beginn der zweiten Zone zudosierten Komponenten abgemischt wird, hat im allgemeinen eine Länge von 5 bis 40 Durchmesser, vorzugsweise von 10 bis 20 Durchmesser. Die Temperatur liegt im gleichen Bereich wie bei der Zudosierung der Komponenten B sowie gegebenenfalls (C) und/oder (D). Die mittleren Verweilzeiten in dieser Zone betragen im allgemeinen 0,1 bis 10, vorzugsweise 0,5 bis 5 min.

In manchen Fällen ist es vorteilhaft, nicht alle Komponenten (B) bis (D) gleichzeitig dem Hauptextruder zuzuführen. In diesem Fall können sich an die zweite Zone des Hauptextruders noch eine oder mehrere gleich aufgebaute Zonen anschließen, in die über Einspeiseöffnungen die Komponenten (B) bzw. (B1), (B2), (C) und/oder (D) zugegeben werden können. Auch in diesen Fällen erfolgt die Dosierung in den Hauptextruder über Seitenextruder, deren Aufbau der vorstehend beschriebenen Form entspricht oder bei Füllstoffen, wie Glasfasern über eine oberseitige Öffnung. Es können auch noch Substanzen zugepumpt werden.

Aufbau und Abmessungen der weiteren Zonen des Hauptextruders, in die Komponenten eingeführt werden, entsprechen den Daten der zweiten Zone.

Besonders bei der Zugabe von Kautschuken, Verarbeitungshilfsmitteln und anderen, an sich bekannten Zusatzstoffen ist es häufig vorteilhaft, einen Extruder mit mehr als zwei Zonen zu verwenden.

Nach der Zugabe aller Aufbaukomonenten oder deren Mischungen in den verschiedenen Zonen des Hauptextruders kann vorteilhafterweise in einer weiteren Zone eine Entgasung durchgeführt werden. Geeignete apparative Ausführungsformen solcher Entgasungszonen sind bekannt. Die Länge dieser Zone beträgt vorzugsweise 3 bis 10 Durchmesser, die Temperatur liegt im Bereich von 240 bis 350 °C, wobei die Entgasung vorzugsweise unter vermindertem Druck durchgeführt wird.

Nach der gegebenenfalls durchgeführten Entgasung werden die erfindungsgemäßen selbstverlöschenden, thermoplastischen Polyphenylenether-Polyamid-Formmassen aus dem Extruder ausgetragen, gegebenenfalls gelagert oder direkt in an sich bekannter Weise weiterverarbeitet.

Die erfindungsgemäßen Formmassen zeichnen sich durch ihr ausgewogenes, hohes mechanisches Eigenschaftsniveau, insbesondere durch ihre gute mehraxiale Schlagzähigkeit, gute Verarbeitbarkeit und Flammwidrigkeit aus.

Sie finden insbesondere Verwendung zur Herstellung von Formkörpern nach der Spritzguß- oder Extrusionstechnik.

Die in den Beispielen und Vergleichsbeispielen beschriebene Flammschutzprüfung wurde im vertikalen Brandtest nach den Vorschriften der Unterwriter Laboratories zwecks Einordnung in eine der Brandklassen UL 94, V0, V1, V2 oder 5V durchgeführt.

Die Einstufung eines flammgeschützten Thermoplasten in die Brandklasse UL 94 V0 erfolgt, wenn folgende Kriterien erfüllt sind: Bei einem Satz von 5 Proben der Abmessungen 127 x 12,7 x 3,16 mm dürfen alle Proben nach zweimaliger Beflammung von 10 s nachbrennen. Die Summe der Nachbrennzeiten bei 10 Beflammungen von 5 Proben darf nicht größer sein als 50 s. Es darf kein brennendes Abtropfen, vollständiges Abbrennen oder ein Nachglühen von länger als 30 s erfolgen. Die Einstufung in die Brandklasse UL 94 V1 erfordert, daß die Nachbrennzeiten nicht länger als 30 s sind und daß die Summe

der Nachbrennzeiten von 10 Beflammungen von 5 Proben nicht größer als 250 s ist. Das Nachglühen darf nie länger als 60 s dauern. Die übrigen Kriterien sind identisch mit den oben erwähnten. Eine Einstufung in die Brandklasse UL 94 V2 erfolgt dann, wenn es bei Erfüllung der übrigen Kriterien zur Einstufung UL 94 V1 zu brennendem Abtropfen kommt.

Eine Einstufung in die Brandklasse UL 94 V5 erfolgt dann, wenn folgende Kriterien erfüllt sind:
Die Nachbrenn- oder Nachglühzeit der Proben darf jeweils nach der letzten Beflammung 60 s nicht überschreiten. Dabei wird jede Probe fünfmal mit einer Flamme von 127 mm Höhe und einem inneren blauen Kegel von 38 mm Höhe 5 s lang beflammt. Zwischen zwei aufeinanderfolgenden Beflammungen liegt jeweils ein Intervall von 5 s. Es darf weder brennendes noch nicht brennendes Abtropfen noch vollständiges Abbrennen eintreten.

Bestimmt wurde ferner Plastechon W gesamt in Anlehnung an die DIN 53 443, Schädigungsarbeit (Ultramid®, BASF-Kunststoffe, Broschüre vom 10.1986, Seite 14, Abb. 7).

Beispiele 1 bis 8 und Vergleichsbeispiele I und II

(A1) Herstellung des modifizierten Polyphenylenethers (A1):

Polyphenylenether A11:

94 Gew.-Teile Poly-(2,6-dimethyl-1,4-phenylen)-ether mit einer relativen Viskosität von 0,63, gemessen in 1 gew.%iger $CHCl_3$-Lösung bei 25 °C, 3,5 Gew.-Teile Polystyrol (PS 144 C, Fa. BASF, MFI 200/5,0 = 24 g/10 min) und 2,5 Gew.-Teile Fumarsäure wurden in einem Zweischneckenextruder (ZSK 53) der Firma Werner & Pfleiderer dosiert und in einem ersten Teil unter Verwendung von Knetelementen bei 280 °C aufgeschmolzen, anschließend in einem zweiten Teil unter Kneten und Verwendung von abgestauten Knetelementen bei 280 °C umgesetzt und anschließend in einer Entgasungszone bei 275 °C unter vermindertem Druck entgast. Die mittlere Verweilzeit im Extruder betrug 2,5 Minuten. Die austretende Schmelze wurde durch ein Wasserbad geleitet, granuliert und getrocknet.

Polyphenylenether A12:

Man verfuhr analog den Angaben der Herstellung des Polyphenylenethers (A11), verwendete jedoch als Einsatzstoffe:
93 Gew.-Teile des Polyphenylenethers,
3,5 Gew.-Teile Fumarsäuremonomethylester und
3 Gew.-Teile Polystyrol.

Als Komponente (A2), (B1), (B2) und Aufbaukomponenten (C) und (D) zur Herstellung der erfindungsgemäßen Formmassen wurden verwendet:

A2: Phosphor gebunden enthaltende Verbindungen:
A21 : Triphenylphosphat und
A22: Triphenylphosphinoxid
B1: Polyamid 6 (Polycaprolactam) mit einem Molekulargewicht (Gewichtsmittel) von 38.000.
B2: Triazinreste gebunden enthaltende Verbindungen:
B21: Melamincyanurat und
B22: Melamin.
C: Schlagzäh modifizierende Kautschuke:
C1: Styrol-Butadien-Styrol-Dreiblockcopolymer mit einem Styrolgehalt von 30 Gew.% (Cariflex®TR1102 der Firma Schell AG).
C2: Ethylen-n-Butylacrylat-Maleinsäureanhydrid-Copolymer im Verhältnis 67:32,7:0,3 Gew.% der Monomereinheiten mit einem Schmelzindex MFI 190/2,16 nach DIN 53 735 von 10 g/10 Min.
D: Zusatzstoff: Zinkoxid.

Die Komponten (A1), (A2), (B1), (B2) und Aufbaukomponenten (C) und (D) wurden einzeln einem Zweischneckenextruder (ZSK 53 der Fa. Werner & Pfleiderer) mit einer Temperatur von 280 °C zugeführt, bei 280 °C intensiv gemischt, bei 290 °C unter einem Druck von 0,1 bar entgast und danach die erhaltene Formmasse granuliert.

Die Granulate wurden im Spritzguß zu Formkörpern verarbeitet, an denen die Flammwidrigkeit und Plastechon W gesamt bestimmt wurde.

Die Zusammensetzung der einzelnen Formmassen und die erhaltenen Prüfergebnisse sind in der Tabelle aufgeführt.

Tabelle

| Beispiele | (Aufbau) Komponenten A: A1 Menge [Gew.-Teile] | A1 Art | A2 Menge [Gew.-Teile] | A2 Art | B: B1 Menge [Gew.-Teile] | B2 Menge [Gew.-Teile] | B2 Art |
|---|---|---|---|---|---|---|---|
| 1 | 45 | A12 | 5 | A21 | 55 | 4 | B21 |
| 2 | 47 | A12 | 4 | A21 | 53 | 5 | B22 |
| 3 | 40 | A11 | 6 | A22 | 55 | 6 | B21 |
| 4 | 50 | A11 | 5 | A22 | 50 | 5 | B21 |
| 5 | 35 | A11 | 5 | A22 | 65 | 6 | B21 |
| 6 | 45 | A11 | 4 | A21 | 55 | 7 | B22 |
| 7 | 60 | A11 | 6 | A22 | 40 | 6 | B22 |
| 8 | 40 | A12 | 6 | A22 | 60 | 7 | B21 |
| Vergl. beispiele | | | | | | | |
| I | 40 | A12 | - | - | 60 | 7 | B21 |
| II | 40 | A12 | 6 | A22 | 60 | - | - |

Tabelle (Fortsetzung)

| Beispiele | (Aufbau) Komponenten C1 Menge [Gew.-Teile] | C2 Menge [Gew.-Teile] | D Menge [Gew.-Teile] | Eigenschaften Plastechon W ges. [Nm] | Brandklasse UL 94 |
|---|---|---|---|---|---|
| 1 | 7 | 2 | 1 | 46 | V0 |
| 2 | 6 | 1 | - | 41 | V0 |
| 3 | 8 | - | - | 38 | 5V |
| 4 | 10 | 2 | - | 42 | 5V |
| 5 | 7 | - | - | 35 | 5V |
| 6 | 7 | - | - | 40 | V0 |
| 7 | 7 | - | - | 40 | 5V |
| 8 | 7 | - | - | 46 | 5V |
| Vergl. beispiele | | | | | |
| I | 7 | - | - | 34 | keine |
| II | 7 | - | - | 37 | keine |

## Patentansprüche

**1.** Selbstverlöschende, thermoplastische Polyphenylenether-Polyamid-Formmassen, enthaltend als wesentliche Aufbaukomponenten

A) 10 bis 90 Gew.% der Komponente (A), die besteht aus
(A$_1$) 70 bis 99 Gew.% eines modifizierten Polyphenylenethers, hergestellt aus
a$_1$) 4,95 - 99,95 Gew.% eines Polyphenylenethers,
a$_2$) 0 - 90 Gew.% eines vinylaromatischen Polymeren,
a$_3$) 0,05 - 10 Gew.%
a$_{31}$) Fumarsäure und/oder
a$_{32}$) eines Maleinimids der allgemeinen Formel I

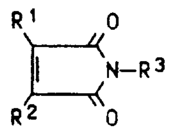 (I),

wobei $R^1$, $R^2$ und $R^3$ Wasserstoff, Alkyl-, Alkoxy-, Cycloalkyl-, Alkenyl-, Aryl-, Arylen- oder Alkylengruppen mit 1 - 12 C-Atomen sind, und/oder
a$_{33}$) eines Amid-Gruppen enthaltenden Monomeren mit einer polymerisierbaren Doppelbindung, und/oder
a$_{34}$) eines Lactam-Gruppen enthaltenden Monomeren mit einer polymerisierbaren Doppelbindung, und/oder
a$_{35}$) eines Halbesters oder Halbamids einer $\alpha,\beta$-ungesättigten Dicarbonsäure
a$_4$) 0 - 80 Gew.% weiterer pfropfaktiver Monomerer und
a$_5$) 0 - 20 Gew.% eines Radikalstarters, und
A2) 1 bis 30 Gew.% einer Phosphor gebunden enthaltenden Verbindung,
wobei die Gew.% bezogen sind auf das Gesamtgewicht der Komponente (A1) und (A2),
B) 90 bis 10 Gew.% der Komponente (B), die besteht aus
B1) 80 bis 99 Gew.% mindestens eines Polyamids und
B2) 1 bis 20 Gew.% mindestens einer einen Triazinrest gebunden enthaltenden Verbindung aus der Gruppe der Cyanursäure und -derivate, wobei die Gew.% bezogen sind auf das Gesamtgewicht der Komponenten (B1) und (B2),
C) 0 bis 30 Gew.% mindestens eines schlagzäh modifizierenden Kautschuks und
D) 0 bis 60 Gew.% mindestens eines Zusatzstoffs,
wobei sich die Summe der Gew.% der Komponenten (A) bis (D) zu 100 Gew.% ergänzen.

**2.** Selbstverlöschende thermoplastische Polyphenylenether-Polyamid-Formmassen nach Anspruch 1, dadurch gekennzeichnet, daß die Komponente A1 ein mit Fumarsäure modifizierter Polyphenylenether ist.

**3.** Selbstverlöschende, thermoplastische Polyphenylenether-Polyamid-Formmassen nach Anspruch 1, dadurch gekennzeichnet, daß die Komponente A2 aus Triphenylphosphinoxid und/oder Triphenylphosphat besteht.

**4.** Selbstverlöschende, thermoplastische Polyphenylenether-Polyamid-Formmassen nach Anspruch 1, dadurch gekennzeichnet, daß die Komponente B1 aus Polycaprolactam mit einem Molekulargewicht (Gewichtsmittel) von 10.000 bis 80.000 besteht.

**5.** Selbstverlöschende, thermoplastische Polyphenylenether-Polyamid-Formmassen nach Anspruch 1, dadurch gekennzeichnet, daß die Komponente B2 aus Melamin und/oder Melamincyanurat besteht.

**6.** Selbstverlöschende, thermoplastische Polyphenylenether-Polyamid-Formmassen nach Ansprüch 1, enthaltend als wesentliche Aufbaukomponenten
A) 10 bis 90 Gew.% der Komponente (A), die besteht aus
(A$_1$) 70 bis 99 Gew.% eines modifizierten Polyphenylenethers, hergestellt aus
a$_1$) 4,95 - 99,95 Gew.% eines Polyphenylenethers,
a$_2$) 0 - 90 Gew.% eines vinylaromatischen Polymeren, und
a$_3$) 0,05 - 10 Gew.% Fumarsäure und
(A2) 1 bis 30 Gew.% einer Phosphorverbindung aus der Gruppe Triphenylphosphinoxid und/oder Triphenylphosphat, wobei die Gew.% bezogen sind auf das Gewicht der Komponente A,
B) 90 bis 10 Gew.% der Komponente (B) die besteht aus

B1) 80 bis 99 Gew.% mindestens eines Polycaprolactams mit einem Molekulargewicht (Gewichtsmittel) von 10.000 bis 80.000, und
B2) 1 bis 20 Gew.% Melamin und/oder Melamincyanurat, wobei die Gew.% bezogen sind auf das Gewicht der Komponente B,
C) 0 bis 30 Gew.% mindestens eines schlagzäh modifizierenden Kautschuks und
D) 0 bis 40 Gew.% mindestens eines Zusatzstoffs,
wobei sich die Summe der Gew.% der Komponenten (A) bis (D) zu 100 Gew.% ergänzen.

**7.** Verwendung der selbstverlöschenden, thermoplastischen Polyphenylenether-Polyamid-Formmassen gemäß einem der Ansprüche 1 bis 6 zur Herstellung von Formkörpern.

**8.** Formkörper, hergestellt aus den selbstverlöschenden, thermoplastischen Polyphenylenether-Polyamid-Formmassen gemäß einem der Ansprüche 1 bis 6.

## Claims

**1.** A self-extinguishing, thermoplastic polyphenylene ether/polyamide molding material containing, as essential components,
A) from 10 to 90% by weight of component (A), which consists of
($A_1$) from 70 to 99% by weight of a modified polyphenylene ether prepared from
$a_1$) 4.95-99.95% by weight of polyphenylene ether,
$a_2$) 0-90% by weight of a vinylaromatic polymer,
$a_3$) 0.05-10% by weight of
$a_{31}$) fumaric acid and/or
$a_{32}$) a maleimide of the formula I

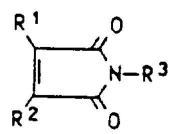

(I)

where $R^1$, $R^2$ and $R^3$ are each hydrogen or an alkyl, alkoxy, cycloalkyl, alkenyl, aryl, arylene or alkylene group of 1 to 12 carbon atoms, and/or
$a_{33}$) a monomer containing amide groups and a polymerizable double bond and/or
$a_{34}$) a monomer containing lactam groups and a polymerizable double bond and/or
$a_{35}$) a half ester or half amide of an $\alpha,\beta$-unsaturated dicarboxylic acid,
$a_4$) 0-80% by weight of further monomers capable of grafting and
$a_5$) 0.20% by weight of a free radical initiator, and
$A_2$) from 1 to 30% by weight of a compound containing bound phosphorus,
the percentages by weight being based on the total weight of components (A1) and (A2),
B) from 90 to 10% by weight of component (B), which consists of
$B_1$) from 80 to 99% by weight of one or more polyamides and
$B_2$) from 1 to 20% by weight of one or more compounds containing a triazine radical and from the group consisting of cyanuric acid and its derivatives, the percentages by weight being based on the total weight of components (B1) and (B2),
C) from 0 to 30% by weight of one or more impact-modifying rubbers and
D) from 0 to 60% by weight of one or more additives,
the percentages by weight of components (A) to (D) summing to 100% by weight.

**2.** A self-extinguishing, thermoplastic polyphenylene ether/polyamide molding material as claimed in claim 1, wherein component A1 is a polyphenylene ether modified with fumaric acid.

**3.** A self-extinguishing, thermoplastic polyphenylene ether/polyamide molding material as claimed in claim 1, wherein component A2 consists of triphenylphosphine oxide and/or triphenyl phosphate.

**4.** A self-extinguishing, thermoplastic polyphenylene ether/polyamide molding material as claimed in claim 1, wherein component B1 consists of polycaprolactam having a weight average molecular weight of from 10,000 to 80,000.

**5.** A self-extinguishing, thermoplastic polyphenylene ether/polyamide molding material as claimed in claim 1, wherein component B2 consists of melamine and/or melamine/cyanurate.

**6.** A self-extinguishing, thermoplastic polyphenylene ether/polyamide molding material as claimed in claim 1, containing, as essential components,
A) from 10 to 90% by weight of component (A), which consists of
($A_1$) from 70 to 99% by weight of a modified polyphenylene ether prepared from
$a_1$) 4.95-99.95% by weight of polyphenylene ether,
$a_2$) 0-90% by weight of a vinylaromatic polymer, and
$a_3$) 0.05-10% by weight of fumaric acid and
$A_2$) from 1 to 30% by weight of a compound from the group consisting of triphenylphosphine oxide and/or triphenyl phosphate, the percentages by weight being based on the total weight of component (A),
B) from 90 to 10% by weight of component (B), which consists of
$B_1$) from 80 to 99% by weight of one or more polycaprolactams having a weight average molecular weight of from 10,000 to 80,000 and
$B_2$) from 1 to 20% by weight of melamine and/or melamine cyanurate, the percentages by weight being based on the weight of component (B),
C) from 0 to 30% by weight of one or more impact-modifying rubbers and
D) from 0 to 40% by weight of one or more additives,
the percentages by weight of components (A) to (D) summing to 100% by weight.

**7.** Use of a self-extinguishing, thermoplastic polyphenylene ether/polyamide molding material as claimed in any of claims 1 to 6 for the production of moldings.

**8.** A molding produced from a self-extinguishing, thermoplastic polyphenylene ether/polyamide molding material as claimed in any of claims 1 to 6.

**Revendications**

**1.** Masses à mouler thermoplastiques autoextinctrices à base de poly(oxyde de phénylène) et de polyamide, contenant comme constituants essentiels
A) 10 à 90% en poids du composant (A) qui se compose de
$A_1$) 70 à 99% en poids d'un poly(oxyde de phénylène) modifié, préparé à partir de
$a_1$) 4,95-99,95% en poids d'un poly(oxyde de phénylène),
$a_2$) 0-90% en poids d'un polymère vinylaromatique,
$a_3$) 0,05-10% en poids
$a_{31}$) d'acide fumarique et/ou
$a_{32}$) d'un maléimide de formule générale I

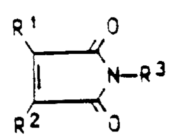

(I),

$R^1$, $R^2$ et $R^3$ étant chacun un atome d'hydrogène ou un groupement alkyle, alcoxy, cycloalkyle, alcényle, aryle, arylène ou alkylène à 1-12 atomes de carbone et/ou
$a_{33}$) d'un monomère comportant une double liaison polymérisable et contenant des groupements amide et/ou
$a_{34}$) d'un monomère comportant une double liaison polymérisable et contenant des groupements lactame et/ou
$a_{35}$) d'un semi-ester ou d'un semi-amide d'un acide dicarboxylique $\alpha,\beta$-insaturé,
$a_4$) 0-80% en poids d'autres monomères à activité de greffage et

$a_5$) 0-20% en poids d'un amorceur radicalaire, et de
$A_2$) 1 à 30% en poids d'un composé contenant en liaison du phosphore,
les pourcentages en poids se rapportant au poids total des composants ($A_1$) et ($A_2$),
B) 90 à 10% en poids du composant (B) qui se compose de
$B_1$) 80 à 99% en poids d'au moins un polyamide et de
$B_2$) 1 à 20% en poids d'au moins un composé contenant en liaison un reste triazine et choisi dans le groupe de l'acide cyanurique et de ses dérivés,
les pourcentages en poids se rapportant au poids total des composants ($B_1$) et ($B_2$),
C) 0 à 30% en poids d'au moins un caoutchouc modifiant la résilience, et
D) 0 à 60% en poids d'au moins un additif,
la somme des pourcentages en poids des composants (A) à (D) étant égale à 100% en poids.

**2.** Masses à mouler thermoplastiques auto-extinctrices à base de poly(oxyde de phénylène) et de polyamide selon la revendication 1, caractérisées en ce que le composant $A_1$ est un poly(oxyde de phénylène) modifié par de l'acide fumarique.

**3.** Masses à mouler thermoplastiques autoextinctrices à base de poly(oxyde de phénylène) et de polyamide selon la revendication 1, caractérisées en ce que le composant $A_2$ est constitue par de l'oxyde de triphénylphosphine et/ou du phosphate de triphényle.

**4.** Masses à mouler thermoplastiques auto-extinctrices à base de poly(oxyde de phénylène) et de polyamide selon la revendication 1, caractérisées en ce que le composant $B_1$ est constitué par un polycaprolactame ayant un poids moléculaire (moyenne en poids) de 10 000 à 80 000.

**5.** Masses à mouler thermoplastiques auto-extinctrices à base de poly(oxyde de phénylène) et de polyamide selon la revendication 1, caractérisées en ce que le composant $B_2$ est constitue par de la mélamine et/ou du cyanurate de mélamine.

**6.** Masses à mouler thermoplastiques auto-extinctrices à base de poly(oxyde de phénylène) et de polyamide selon la revendication 1, contenant comme constituants essentiels
A) 10 à 90% en poids du composant (A) qui se compose de
$A_1$) 70 à 99% en poids d'un poly(oxyde de phénylène) modifié, préparé à partir de
$a_1$) 4,95-99,95% en poids d'un poly(oxyde de phénylène),
$a_2$) 0-90% en poids d'un polymère vinylaromatique et
$a_3$) 0,05-10%% en poids d'acide fumarique et de
$A_2$) 1 à 30% en poids d'un composé du phosphore, choisi dans le groupe de l'oxyde de triphénylphosphine et/ou du phosphate de triphényle,
les pourcentages en poids se rapportant au poids du composant A,
B) 90 à 10% en poids du composant (B) qui se compose de
$B_1$) 80 à 99% en poids d'au moins un polycaprolactame ayant un poids moléculaire (moyenne en poids) de 10 000 à 80 000, et de
$B_2$) 1 à 20% en poids de mélamine et/ou de cyanurate de mélamine,
les pourcentages en poids se rapportant au poids du composant B,
C) 0 à 30% en poids d'au moins un caoutchouc modifiant la résilience, et
D) 0 à 40% en poids d'au moins un additif,
la somme des pourcentages en poids des composants (A) à (D) étant égale à 100% en poids.

**7.** Utilisation des masses à mouler thermoplastiques auto-extinctrices à base de poly(oxyde de phénylène) et de polyamide selon l'une quelconque des revendications 1 à 6, pour la fabrication de corps moulés.

**8.** Corps moulés, fabriques à partir des masses à mouler thermoplastiques auto-extinctrices à base de poly(oxyde de phénylene) et de polyamide selon l'une quelconque des revendications 1 à 6.